(19) Europäisches Patentamt
European Patent Office
Office européen des brevets

(11) **EP 4 779 717 A1**

(12) **EUROPEAN PATENT APPLICATION**
published in accordance with Art. 153(4) EPC

(43) Date of publication:
**22.07.2026 Bulletin 2026/30**

(21) Application number: **24865714.0**

(22) Date of filing: **22.08.2024**

(51) International Patent Classification (IPC):
*H01M 4/525* (2010.01)    *H01M 4/505* (2010.01)
*H01M 4/131* (2010.01)    *H01M 10/052* (2010.01)
*C01G 53/00* (2025.01)    *H01M 4/02* (2006.01)

(52) Cooperative Patent Classification (CPC):
**C01G 53/00; H01M 4/02; H01M 4/131; H01M 4/505; H01M 4/525; H01M 10/052;** Y02E 60/10

(86) International application number:
**PCT/KR2024/012503**

(87) International publication number:
**WO 2025/058273 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 KR 20230120939**

(71) Applicants:
• **SK innovation Co., Ltd.**
  **Seoul 03188 (KR)**
• **SK On Co., Ltd.**
  **Seoul 03161 (KR)**

(72) Inventors:
• **NOH, Mi Jung**
  **Daejeon 34124 (KR)**
• **LEE, Tae Kyoung**
  **Daejeon 34124 (KR)**
• **SON, Byoung Ki**
  **Daejeon 34124 (KR)**
• **CHOI, Jae Ho**
  **Daejeon 34124 (KR)**
• **HAN, Kook Hyun**
  **Daejeon 34124 (KR)**

(74) Representative: **Stolmár & Partner**
**Patentanwälte PartG mbB**
**Blumenstraße 17**
**80331 München (DE)**

(54) **POSITIVE ELECTRODE ACTIVE MATERIAL FOR LITHIUM SECONDARY BATTERY, LITHIUM SECONDARY BATTERY COMPRISING SAME, AND METHOD FOR MANUFACTURING POSITIVE ELECTRODE ACTIVE MATERIAL**

(57) A cathode active material for a lithium secondary battery according to embodiments of the present disclosure includes lithium metal oxide particles containing cobalt and aluminum. The lithium metal oxide particles have a form of secondary particles formed by aggregation of primary particles, and a weight ratio of aluminum to cobalt contained within the primary particles satisfies a predetermined relationship. Accordingly, structural stability and high-temperature stability may be improved, and a cathode having high energy density and high output characteristics may be realized.

[FIG. 1]

**Description**

[Technical Field]

The present disclosure relates to a positive electrode (cathode) active material for a lithium secondary battery, a lithium secondary battery including the same, and a method for manufacturing a cathode active material.

[Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

For example, the lithium secondary battery may include: an electrode assembly including a cathode, an anode, and a separation membrane (separator); and an electrolyte that impregnates the electrode assembly. The lithium secondary battery may further include, for example, a pouch-type outer case that accommodates the electrode assembly and the electrolyte.

A lithium metal oxide may be used as a cathode active material of the lithium secondary battery. Although energy density increases as particle size of the lithium metal oxide increases, capacity and output may decrease as the particle size increases. As the application scope of lithium secondary batteries continues to expand, longer cycle life, higher capacity, and higher energy density are required.

[Summary of Invention]

[Problems to be Solved by Invention]

An object of the present disclosure is to provide a cathode active material for a lithium secondary battery having improved energy density and stability.

Another object of the present disclosure is to provide a lithium secondary battery including the cathode active material for a lithium secondary battery having improved energy density and stability.

Yet another object of the present disclosure is to provide a method for manufacturing a cathode active material having improved energy density and stability.

[Means for Solving Problems]

A cathode active material for a lithium secondary battery according to exemplary embodiments of the present disclosure includes lithium metal oxide particles containing cobalt and aluminum and having a form of secondary particles in which a plurality of primary particles are agglomerated. A WR of the cathode active material, represented by Equation 1 below, may be 0.9 to 1.1:

$$[\text{Equation 1}]$$

$$WR = A / B$$

In Equation 1, A may be a ratio of aluminum content to cobalt content contained in primary particles of particles having a particle diameter of n $\mu$m among the lithium metal oxide particles.

B may be a ratio of aluminum content to cobalt content contained in primary particles of particles having a particle diameter of n+10 $\mu$m among the lithium metal oxide particles.

The n $\mu$m may be 1 $\mu$m to 22 $\mu$m.

In some embodiments, the ratio of aluminum content to cobalt content may be a value measured using atomic probe tomography (APT) on a cross-section of the primary particles.

In some embodiments, a ratio of aluminum content in primary particles of particles having a particle diameter of

n+10 $\mu$m among the lithium metal oxide particles to aluminum content in primary particles of particles having a particle diameter of n $\mu$m may be 0.85 to 1.1.

In some embodiments, the lithium metal oxide particles may have a particle diameter of 0.8 $\mu$m to 30 $\mu$m.

In some embodiments, a minor axis of each of the primary particles may be 100 nm to 500 nm.

In some embodiments, aluminum content contained in each primary particle of the lithium metal oxide particles may be less than cobalt content contained in each primary particle of the lithium metal oxide particles.

In some embodiments, the lithium metal oxide particles may further include nickel or manganese.

In some embodiments, each of the lithium metal oxide particles may be represented by Formula 1 below:

[Formula 1]    $Li_aCO_xAl_yM_{1-x-y}O_{2+b}$

In Formula 1, $0.9 \leq a \leq 1.2$, $0 < x \leq 0.3$, $O < y \leq 0.2$, $-0.2 \leq b \leq 0.2$, and M may be at least one of Ni, Mn, Ti, Zr, Ba, Tb, Nb, Y, W, B, and Sr.

A lithium secondary battery according to exemplary embodiments of the present disclosure includes: a cathode including the above-described cathode active material for a lithium secondary battery; and an anode disposed opposite the cathode.

In a method for manufacturing a cathode active material according to exemplary embodiments of the present disclosure, a first precursor including cobalt and aluminum may be prepared. A second precursor including cobalt and aluminum and having a median particle diameter ($D_{50}$) that is 9 $\mu$m to 11 $\mu$m larger than a median particle diameter ($D_{50}$) of the first precursor may be prepared. A precursor blend may be prepared by mixing a lithium precursor, the first precursor, and the second precursor. The precursor blend may be calcined.

In some embodiments, a ratio ($A_1/B_1$) between a ratio ($A_1$) of aluminum content to cobalt content included in the first precursor and a ratio ($B_1$) of aluminum content to cobalt content included in the second precursor may be 0.9 to 1.1.

In a method for manufacturing a cathode active material according to exemplary embodiments of the present disclosure, a first precursor including cobalt may be prepared. A second precursor including cobalt and having a median particle diameter ($D_{50}$) that is 9 $\mu$m to 11 $\mu$m larger than a median particle diameter ($D_{50}$) of the first precursor may be prepared. A first blend may be prepared by mixing the second precursor, a lithium precursor, and an aluminum precursor. A second blend may be prepared by mixing the first blend and the first precursor. The second blend may be calcined.

In some embodiments, the first precursor and the second precursor may not contain aluminum.

In some embodiments, a ratio of cobalt content in the second precursor to cobalt content in the first precursor may be 0.85 to 1.1 on a weight basis.

In some embodiments, a content of the second precursor in the second blend may be greater than or equal to a content of the first precursor.

[Advantageous effects]

The cathode active material for a lithium secondary battery according to embodiments of the present disclosure may include lithium metal oxide particles containing cobalt and aluminum and having a secondary particle structure. A cathode active material having high energy density and improved structural stability may be provided.

A ratio of the weight of aluminum to the weight of cobalt contained in the primary particles of small lithium metal oxide particles and a ratio of the weight of aluminum to the weight of cobalt contained in the primary particles of large lithium metal oxide particles may satisfy a predetermined relationship. Accordingly, output characteristics and capacity of the cathode active material for a lithium secondary battery may be improved, and room temperature cycle life and high temperature stability may also be enhanced.

[Brief Description of Drawings]

FIGS. 1 and 2 are a schematic plan view and a schematic cross-sectional view, respectively, illustrating a lithium secondary battery according to exemplary embodiments.

FIGS. 3 to 5 are atomic probe tomography (APT) analysis photographs of lithium metal oxide particles prepared according to Example 1, Example 2, and Comparative Example 1, respectively.

[Mode for Carrying out Invention]

Embodiments of the present disclosure provide a cathode active material including lithium metal oxide particles and a lithium secondary battery including the cathode active material.

The lithium secondary battery according to the embodiments of the present disclosure may be widely applied in green technology fields, including electric vehicles, battery charging stations, and green technology fields including renewable energy systems using batteries, such as solar power generation and wind power generation. In addition, the lithium secondary battery according to the embodiments of the present disclosure may be used in eco-friendly electric vehicles and hybrid vehicles to suppress emission of air pollutants and greenhouse gases, thereby contributing to mitigation of climate change.

Hereinafter, embodiments of the present disclosure will be described in detail. However, the embodiments are merely illustrative, and the present disclosure is not limited to the specific embodiments described as examples.

In the exemplary embodiments, the cathode active material for a lithium secondary battery (hereinafter, also abbreviated as the "cathode active material") may include lithium metal oxide particles containing cobalt and aluminum.

The lithium metal oxide particles may contain cobalt (Co), thereby exhibiting high lithium ion conductivity and reducing an internal resistance of the particles. Accordingly, output characteristics of the lithium secondary battery may be improved.

The lithium metal oxide particles may contain aluminum (Al), thereby improving mechanical and chemical stability of the particles and enhancing heat resistance. Accordingly, cracks in the cathode active material may be suppressed even during repeated charge and discharge cycles, and high-temperature cycle life characteristics of the secondary battery may be improved.

The lithium metal oxide particles may include secondary particles. The secondary particle may refer to a particle in which a plurality of primary particles are agglomerated and are observed or regarded as substantially one particle.

For example, in a cross-sectional image of the secondary particle measured using a scanning electron microscope (SEM), boundaries of the primary particles may be observed. Each primary particle may be distinguished by a boundary within the secondary particle.

For example, the secondary particle may be agglomerated from greater than 10, 30 or more, 50 or more, or 100 or more primary particles.

As the lithium metal oxide particles have a structure in which primary particles having small median particle diameters are agglomerated, energy density may be improved while maintaining a short lithium ion migration distance. For example, lithium ions may migrate through the boundaries between the primary particles, and migration distance and migration rate of the lithium ions may be improved. Accordingly, energy density may be improved while suppressing degradation of capacity and output characteristics.

According to some embodiments, a minor axis of the primary particle may be 100 nm to 500 nm. The minor axis may refer to the shortest diameter of the primary particle as measured by morphological analysis such as SEM. Within this range, lithium ion migration distance may be sufficiently shortened while the secondary particles may be smoothly agglomerated. In addition, structural stability of the lithium metal oxide particles may be improved, thereby suppressing crack formation.

According to exemplary embodiments, a WR of the cathode active material, represented by Equation 1 below, may be 0.9 to 1.1.

$$[\text{Equation 1}]$$

$$WR = A / B$$

In Equation 1, A may be a weight-based ratio of aluminum content to cobalt content contained in primary particles of particles having a particle diameter of n $\mu$m (hereinafter, referred to as "small particles") among the lithium metal oxide particles.

B may be a weight-based ratio of aluminum content to cobalt content contained in primary particles of particles having a particle diameter of n+10 $\mu$m (hereinafter, referred to as "large particles") among the lithium metal oxide particles. The particle diameter of the large particles may include a case where it is arithmetically equal to n+10 $\mu$m, or a case where it has a predetermined error therefrom but is recognized as substantially the same.

For example, when A is a ratio of aluminum content to cobalt content measured from primary particles of lithium metal oxide particles having a particle diameter of about 4 $\mu$m, B may be a ratio of aluminum content to cobalt content measured from primary particles of lithium metal oxide particles having a particle diameter of about 14 $\mu$m.

In Equation 1, n $\mu$m may be any value selected within a range of a minimum particle diameter ($D_{min}$) or more and a maximum particle diameter ($D_{max}$)-10 $\mu$m or less of the lithium metal oxide particles. The minimum particle diameter ($D_{min}$) may be a minimum value of particle diameter in a cumulative volume-based particle size distribution curve of the lithium metal oxide particles. The maximum particle diameter ($D_{max}$) may be a maximum value of particle diameter in the cumulative volume-based particle size distribution curve of the lithium metal oxide particles.

For example, n $\mu$m in Equation 1 may be 1 $\mu$m to 22 $\mu$m, 1.4 $\mu$m to 22 $\mu$m, 1.4 $\mu$m to 18 $\mu$m, or 4.2 $\mu$m to 16.1 $\mu$m. As particles having particle diameters within the above-described ranges satisfy Equation 1, concentrations of cobalt and aluminum contained within each of the lithium metal oxide particles may become uniform.

As used herein, the "content" or "concentration" of a metal may refer to a weight ratio of the metal within a lithium metal oxide particle or a primary particle.

The cobalt content and the aluminum content contained in a primary particle may be measured by atomic probe tomography (APT) on a cross-section of the primary particles. For example, a lithium metal oxide particle may be cut to expose a cross-section of the primary particles, and APT analysis may then be performed on the cross-section of the exposed primary particle.

In one embodiment, APT analysis on the cross-section of the primary particles may be performed by cutting the primary particle having the exposed cross-section into a needle-like structure having a tip radius of about 40 nm and loading the needle-like structure into a chamber.

For example, a lithium metal oxide particle may be cut, and an internal composition of primary particles having a minor axis of 100 nm to 500 nm may be measured by the method described above. In one embodiment, the internal composition of the primary particles may be an arithmetic mean of values measured twice.

As concentrations of aluminum and cobalt within the primary particles of the lithium metal oxide particles satisfy Equation 1 described above, an increase in internal resistance of the lithium metal oxide may be prevented, and stability of an internal structure may be further improved.

In one example, when a cathode active material including particles having different sizes is doped or coated with aluminum (Al), surface area and diffusion rate may vary depending on particle size, and thus doping or coating amount may vary. For example, aluminum (Al) content may be relatively high in particles having a relatively small size (e.g., small particles), while an internal doping amount or coating amount of aluminum (Al) may be reduced in particles having a relatively large size (e.g., large particles). In this case, a concentration ratio of aluminum to cobalt within the small particles may be relatively high. Accordingly, output of a lithium secondary battery may be reduced due to small particles having high aluminum content.

In addition, since aluminum content of the large particles is relatively low, high-temperature cycle life and structural stability may be degraded. Furthermore, due to a difference in aluminum content between particles, a burden may be concentrated on particles having relatively low aluminum content, thereby accelerating degradation.

According to exemplary embodiments, aluminum content within primary particles of the large particles and aluminum content within primary particles of the small particles may be substantially the same. Therefore, variation in content or concentration of aluminum and cobalt depending on particle size may be reduced.

In some embodiments, the WR in Equation 1 may be greater than 0.90, for example, 0.91 or more, 0.93 or more, or 0.95 or more. In some embodiments, the WR in Equation 1 may be less than 1.10, for example, 1.09 or less, or 1.08 or less.

In one embodiment, the WR may be 0.93 to 1.09, for example, 0.95 to 1.08, 0.95 to 1.08, or 0.98 to 1.08.

Within the above range, stability of the cathode active material may be further improved, and local variations in aluminum concentration due to a difference in particle diameter may be reduced, thereby improving power characteristics and cycle characteristics.

For example, when a weight ratio of aluminum to cobalt contained in a primary particle of any one of the lithium metal oxide particles is C, a weight ratio of aluminum to cobalt contained in primary particles of each of the lithium metal oxide particles may be 0.9C to 1.1C.

If aluminum and cobalt concentrations differ depending on particle size, energy density and stability of the cathode active material may be reduced, and stress and oxidation due to charge and discharge may be concentrated in some particles, thereby increasing a rate of degradation.

According to exemplary embodiments, the lithium metal oxide particles may have a uniform aluminum concentration throughout the particles, thereby improving cycle life and stability of the cathode active material. In addition, a weight ratio of aluminum to cobalt may be uniform throughout the lithium metal oxide particles, thereby improving capacity and output characteristics.

In one embodiment, a ratio of aluminum content (concentration) within primary particles of particles having a particle diameter of n+10 $\mu$m among the lithium metal oxide particles to aluminum content (concentration) within primary particles of particles having a particle diameter of n $\mu$m may be 0.85 to 1.1, 0.9 to 1.05, or 0.95 to 1.05.

In some embodiments, aluminum content within each primary particle of the lithium metal oxide particles may be less than cobalt content within each primary particle of the lithium metal oxide particles. For example, in Equation 1, A and B may each be less than 1.

For example, when A and B exceed 1, aluminum concentration within the lithium metal oxide particles may become excessively high. Accordingly, internal resistance of the lithium metal oxide particles may increase, and conductivity of the particles may decrease. As a result, output and capacity of the lithium secondary battery may be reduced.

As concentration of cobalt contained within primary particles of the lithium metal oxide particles is greater than that of aluminum, heat resistance and structural stability of the cathode active material may be enhanced while preventing a decrease in energy density and lithium ion conductivity. Accordingly, output of the secondary battery may be improved while preventing deterioration and defects of the cathode active material even under harsh conditions of repeated charge and discharge and high temperature and high humidity.

In some embodiments, A and B in Equation 1 may each be 0.7 or less, for example, 0.6 or less, 0.5 or less, or 0.2 or less. In one embodiment, A and B may each be 0.001 or more, 0.01 or more, or 0.03 or more.

Within the above range, mechanical properties and chemical stability of the cathode active material may be improved, and an increase in resistance may be prevented. Accordingly, both output characteristics and room temperature and high-temperature cycle characteristics of the lithium secondary battery may be improved.

In some embodiments, the lithium metal oxide particles may have a particle diameter of 0.8 $\mu$m to 32 $\mu$m. In one embodiment, the particle diameter may be 1.0 $\mu$m to 32 $\mu$m, 1.4 $\mu$m to 30 $\mu$m, or 1.4 $\mu$m to 22 $\mu$m.

For example, when the particle diameter of the lithium metal oxide particles is 32 $\mu$m or less, mechanical properties and structural stability of the particles may be improved, thereby enhancing cycle characteristics of the lithium secondary battery. For example, when the particle diameter of the lithium metal oxide particles is 0.8 $\mu$m or more, migration distance of lithium ions may be shortened, thereby improving capacity characteristics and output characteristics of the lithium secondary battery.

In one embodiment, the cathode active material may have a median particle diameter ($D_{50}$) of 4 $\mu$m to 20 $\mu$m, 4 $\mu$m to 15 $\mu$m, or 5 $\mu$m to 12 $\mu$m.

In one embodiment, the cathode active material may have a bimodal particle size distribution. A volume-based particle size distribution curve of the cathode active material may have two different modes. For example, the volume-based particle size distribution curve of the cathode active material may have modes at n $\mu$m and n+10 $\mu$m. Accordingly, tap density of the cathode active material and packing density of an electrode may be improved.

In some embodiments, each of the lithium metal oxide particles may include a compound represented by Formula 1 below.

$$[\text{Formula 1}] \qquad Li_aCo_xAl_yM_{1-x-y}O_{2+b}$$

In Formula 1, a, x, y and b may satisfy $0.9 \leq a \leq 1.2$, $0 < x \leq 0.3$, $0 < y \leq 0.2$, and $-0.2 \leq b \leq 0.2$, and M may be at least one of Ni, Mn, Ti, Zr, Ba, Tb, Nb, Y, W, B, and Sr.

The chemical structure represented by Formula 1 indicates a bonding relationship among elements included in a layered structure or a crystal structure of the cathode active material, and does not exclude the presence of additional elements. For example, M may be provided as a main active element of the cathode active material. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Hf, V, Nb, Ta, Cr, Mo, Fe, Cu, Ag, Zn, Ga, C, Si, Sn, Ra, P and S. The auxiliary element may also act, for example, as an auxiliary active element that contributes to the capacity/output activity of the cathode active material together with Al, Co, Ni, or Mn.

According to embodiments of the present disclosure, a cathode active material may be prepared using heterogeneous precursors having different median particle diameters.

According to exemplary embodiments, a first precursor and a second precursor having different median particle diameters ($D_{50}$) may be prepared. For example, the median particle diameter ($D_{50}$) of the second precursor may be 9 $\mu$m to 11 $\mu$m larger than a median particle diameter ($D_{50}$) of the first precursor. In one embodiment, the median particle diameters of the first precursor and the second precursor may be adjusted by controlling co-precipitation time, co-precipitation temperature or the like.

The first precursor and the second precursor may include a composite metal salt compound. For example, a transition metal solution may be prepared by mixing active material metal precursors with a precipitant and/or chelating agent in a solvent. The transition metal solution may be co-precipitated in a reactor to prepare the first precursor and the second precursor.

The active metal precursor may include a salt of an active metal (e.g., nickel, cobalt, manganese, or aluminum, etc.). Examples of the nickel salt may include nickel sulfate, nickel hydroxide, nickel nitrate, nickel acetate, and hydrates thereof. Examples of the manganese salt may include manganese sulfate, manganese acetate, and hydrates thereof. Examples of the cobalt salt may include cobalt sulfate, cobalt nitrate, cobalt carbonate, and hydrates thereof. Examples of the aluminum salt may include aluminum sulfate, aluminum nitrate, aluminum hydroxide, and hydrates thereof.

The precipitant may include an alkaline compound such as sodium hydroxide (NaOH), sodium carbonate

($Na_2CO_3$), etc. The chelating agent may include, for example, ammonium hydroxide, ammonium carbonate, etc.

According to exemplary embodiments, the first precursor and the second precursor may each contain cobalt and aluminum.

A ratio of aluminum content to cobalt content included in the first precursor and a ratio of aluminum content to cobalt content included in the second precursor may be substantially the same.

For example, a ratio ($A_1/B_1$) between a weight-based ratio ($A_1$) of aluminum content to cobalt content included in the first precursor and a weight-based ratio ($B_1$) of aluminum content to cobalt content included in the second precursor may be 0.9 to 1.1, 0.93 to 1.09, 0.95 to 1.08, or 0.95 to 1.05.

A precursor blend may be prepared by mixing the first precursor and the second precursor with a lithium precursor.

The lithium precursor may include lithium carbonate, lithium nitrate, lithium acetate, lithium oxide, lithium hydroxide or the like. These may be used alone or in combination of two or more thereof.

The precursor blend may be introduced into a reactor and calcined to prepare lithium metal oxide particles. The lithium metal oxide particles may have a form of secondary particles formed by agglomeration of a plurality of primary particles. For example, the primary particles may be derived from the first precursor and the second precursor.

By adjusting content ratios of aluminum and cobalt included in heterogeneous precursors having different particle diameters to be substantially identical, concentrations of aluminum and cobalt in the primary particles may be substantially the same. Accordingly, cobalt and aluminum contents may be uniform throughout the lithium metal oxide particles, thereby simultaneously improving cycle life characteristics, structural stability, and output characteristics of the secondary battery.

According to exemplary embodiments, the first precursor and the second precursor may each contain cobalt and may not contain aluminum.

Content (concentration) of cobalt included in the first precursor and content (concentration) of cobalt included in the second precursor may be substantially the same. For example, a ratio of cobalt content in the second precursor to cobalt content in the first precursor may be 0.85 to 1.1, 0.9 to 1.05, or 0.95 to 1.05 on a weight basis.

A first blend may be prepared by uniformly mixing the second precursor with a lithium precursor and an aluminum precursor. For example, the mixing may be performed using a dry high-speed mixer.

A second blend may be prepared by adding the first precursor to the first blend and uniformly mixing the same. The second blend may be introduced into a reactor and calcined to prepare lithium metal oxide particles having a form of secondary particles.

The second precursor may be mixed with an aluminum precursor prior to mixing with the first precursor, thereby allowing the first precursor, the second precursor, and the aluminum precursor to be more uniformly mixed within the second blend. Accordingly, a concentration of cobalt relative to aluminum within the lithium metal oxide particles may be uniform throughout.

For example, when the first precursor, the second precursor, and the aluminum precursor are simultaneously mixed and calcined, a doping amount and a coating amount of aluminum with respect to the second precursor having a relatively large size may be reduced. Accordingly, aluminum concentration within primary particles derived from the first precursor may be relatively increased.

In one embodiment, a content of the second precursor in the second blend may be equal to or greater than a content of the first precursor. For example, a content ratio of the first precursor to the second precursor within the second blend may be 1:9 to 5:5, 2:8 to 4:6, or 3:7 to 4:6 on a weight basis. The second precursor having a relatively large size may be first mixed with the aluminum precursor in a relatively high content, thereby making a content ratio of cobalt to aluminum within the secondary particles more uniform.

In one embodiment, calcination of the precursor blend or the second blend may be performed in an oxygen-containing atmosphere at a temperature of about 600°C to 900°C for about 10 hours to 15 hours.

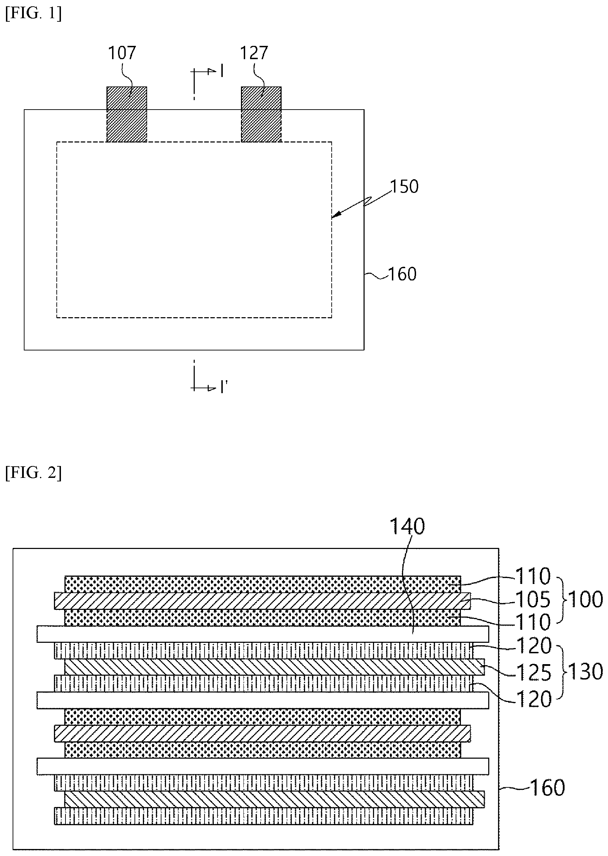

Hereinafter, the lithium secondary battery which includes a cathode including the above-described cathode active material for a lithium secondary battery will be described with reference to FIGS. 1 and 2.

FIGS. 1 and 2 are a schematic plan view and a schematic cross-sectional view, respectively, illustrating the lithium secondary battery according to exemplary embodiments. For example, FIG. 2 is a cross-sectional view taken along line I-I' in FIG. 1.

Referring to FIGS. 1 and 2, the lithium secondary battery may include a cathode 100 including a cathode active material containing the above-described lithium metal oxide particles and an anode 130 disposed opposite the cathode 100.

The cathode 100 may include a cathode active material layer 110 formed by applying the cathode active material containing the above-described lithium metal oxide particles onto a cathode current collector 105.

For example, a cathode slurry may be prepared by mixing the cathode active material with a binder, a conductive material, and/or a dispersant in a solvent, followed by stirring. The prepared cathode slurry may be coated onto at least one surface of the cathode current collector 105, and then dried and roll-pressed to fabricate the cathode 100.

The cathode current collector 105 may include stainless steel, nickel, aluminum, titanium, or an alloy thereof. The cathode current collector 105 may also include aluminum or stainless steel having a surface treated with carbon, nickel, titanium, or silver.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrenebutadiene rubber (SBR), and may be used together with a thickener such as carboxymethyl cellulose (CMC).

For example, a PVDF-based binder may be used as a binder for forming the cathode. In this case, the amount of the binder for forming the cathode active material layer 110 may be reduced and the amount of the cathode active material may be relatively increased. Thereby, the output and capacity of the secondary battery may be improved.

The conductive material may be included to facilitate electron transfer between the active material particles. For example, the cathode conductive material may include carbon-based conductive materials such as graphite, carbon black, graphene, or carbon nanotubes; and/or metal-based conductive materials such as tin, tin oxide, and titanium oxide; as well as perovskite materials such as $LaSrCoO_3$, and $LaSrMnO_3$, etc.

The anode 130 may include an anode current collector 125 and an anode active material layer 120 formed by coating an anode active material onto at least one surface of the anode current collector 125.

As the anode active material, any active material known in the art may be used, so long as it is capable of absorbing and releasing lithium ions, without particular limitation. For example, carbon-based materials such as crystalline carbon, amorphous carbon, carbon composites, carbon fibers, etc.; a lithium alloy; silicon or tin may be used.

Examples of the amorphous carbon may include hard carbon, coke, mesocarbon microbead (MCMB) calcined at 1500°C or lower, mesophase pitch-based carbon fiber (MPCF) or the like.

Examples of the crystalline carbon may include graphite-based carbon such as natural graphite, graphitized coke, graphitized MCMB, graphitized MPCF or the like.

Other elements contained in the lithium alloy may include, for example, aluminum, zinc, bismuth, cadmium, antimony, silicon, lead, tin, gallium, indium or the like.

The anode current collector 125 may include gold, stainless steel, nickel, aluminum, titanium, copper, or an alloy thereof, and for example, may include copper or a copper alloy.

In some embodiments, a slurry may be prepared by mixing the anode active material with a binder, a conductive material and/or a dispersant in a solvent, followed by stirring. The slurry may be coated on the anode current collector, and then dried and roll-pressed to fabricate the anode 130.

As the binder and the conductive material, materials which are substantially the same as or similar to the above-described materials may be used. In some embodiments, a binder for forming an anode may include, for example, an aqueous binder such as styrenebutadiene rubber (SBR) to ensure compatibility with the carbon-based active material, and may be used together with a thickener such as carboxymethyl cellulose (CMC).

In some embodiments, a separator 140 may be interposed between the cathode 100 and the anode 130. The separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator 140 may include a nonwoven fabric made of glass fibers having a high melting point, polyethylene terephthalate fibers, etc.

According to exemplary embodiments, an electrode cell is defined by the cathode 100, the anode 130, and the separator 140, and a plurality of electrode cells may be stacked to form, for example, a jelly roll type electrode assembly 150. For example, the electrode assembly 150 may be formed by winding, stacking, or folding the separator 140.

The electrode assembly may be accommodated in a case 160 together with an electrolyte to define the lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the like may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, γ-butyrolactone, propylene sulfite and tetrahydrofuran, and the like may be used. These may be used alone or in combination of two or more thereof.

As illustrated in FIG. 1, electrode tabs (cathode tabs and anode tabs) may be formed from the cathode current collector 105 and the anode current collector 125, each belonging to a respective electrode cell, and may extend to one side of the case 160. The electrode tabs may be welded together with the one side of the case 160 to form electrode leads (a cathode lead 107 and an anode lead 127) that extend from or are exposed to the outside of the case 160.

The lithium secondary battery may be manufactured, for example, in a cylindrical, prismatic, pouch, or coin type using a can.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

### Example 1

Preparation of Cathode Active Material

$NiSO_4$, $CoSO_4$, $MnSO_4$, and $Al_2(SO_4)_3$ were mixed in distilled water so as to have a composition of 90:5:3:2. The distilled water was used after removal of dissolved oxygen by bubbling $N_2$ for 24 hours.

Then, the mixed solution was introduced into a reactor at 60°C, and $NH_3H_2O$ was added so that the pH of the mixed solution was 10.5. The mixture was stirred at a constant rate to prepare a transition metal solution. $NH_3H_2O$ was added in an amount of at least four times a molar ratio of the transition metals. NaOH was added to the reactor at a constant rate so that a molar ratio of transition metals to NaOH in the prepared transition metal solution was 1:2. Thereafter, a co-precipitation reaction was conducted for 38 hours to prepare a preliminary precursor having a median particle diameter $(D_{50})$ of 4.5 $\mu$m. The preliminary active material precursor was heat-treated in an oven at 120°C for 10 hours to obtain a first precursor having a median particle diameter $(D_{50})$ of 4.5 $\mu$m. The "median particle diameter $(D_{50})$" was measured as a particle diameter at a cumulative volume fraction of 50% in a volume-based particle size distribution obtained by accumulating particles in order of increasing particle diameter.

Thereafter, a second precursor having a median particle diameter of 14.5 $\mu$m was prepared using the same method as the precursor preparation method, except that a total co-precipitation reaction time was changed from 38 hours to 78 hours.

Lithium hydroxide, the first precursor, and the second precursor were added to a dry high-speed mixer at a ratio of 1.05:0.6:0.4, and uniformly mixed for about 5 minutes to prepare a mixture.

The mixture was placed in a calcination furnace and heated to 750°C at a heating rate of 2°C/min, and maintained at 750°C for 10 hours. Oxygen was continuously supplied at a flow rate of 10 mL/min during the heating and holding. After completion of the calcination, the calcined product was allowed to cool naturally to room temperature, and then pulverized and classified to obtain a cathode active material having a composition of $LiNi_{0.9}Co_{0.05}Mn_{0.03}Al_{0.02}O_2$.

Manufacture of Lithium Secondary Battery

A secondary battery was manufactured using the prepared cathode active material. Specifically, a cathode slurry was prepared by mixing the cathode active material, Denka Black as a conductive material, and PVDF as a binder at a mass ratio of 93:5:2. The cathode slurry was coated on an aluminum current collector, followed by drying and roll-pressing to fabricate a cathode. After roll-pressing, a target electrode density of the cathode was adjusted to 3.3 g/cc.

Lithium metal was used as an anode active material.

The cathode and anode prepared as described above were each notched into circular shapes having diameters of $\Phi$14 and $\Phi$16, respectively, and stacked with a separator (polyethylene, thickness: 13 $\mu$m) notched into $\Phi$19 interposed between the cathode and the anode to form an electrode cell. The electrode cell was placed in a coin cell outer case of standard having a diameter of 20 mm and a height of 1.6 mm, followed by electrolyte injection and assembly. Thereafter, aging was carried out for 12 hours or more to allow the electrolyte to be impregnated into the electrode.

A 1 M $LiPF_6$ solution prepared using a mixed solvent of EC/EMC (30/70; volume ratio) was used as the electrolyte.

### Example 2

A cathode active material ($LiNi_{0.9}Co_{0.05}Mn_{0.04}Al_{0.01}O_2$) and a secondary battery were manufactured in the same manner as in Example 1, except that $NiSO_4$, $CoSO_4$, $MnSO_4$, and $Al_2(SO_4)_3$ were mixed in distilled water so as to have a composition of 90:5:4:1.

### Example 3

A first precursor and a second precursor were prepared in the same manner as in Example 2, except that $Al_2$

$(SO_4)_3$ was not added during co-precipitation of the first precursor and the second precursor.

Lithium hydroxide, the second precursor ($D_{50}$: 14.5 $\mu$m), and Al(OH)$_3$ were mixed in a dry high-speed mixer at a ratio of 1.05:0.6:0.01 for about 2 minutes. Thereafter, the first precursor ($D_{50}$: 4.5 $\mu$m) was added to a dry high-speed mixer at a ratio of 0.4 and uniformly mixed for about 5 minutes.

The mixture was placed in a calcination furnace and heated to 750°C at a heating rate of 2°C/min, and maintained at 750°C for 10 hours. Oxygen was continuously supplied at a flow rate of 10 mL/min during the heating and holding. After completion of the calcination, the calcined product was allowed to cool naturally to room temperature, and then pulverized and classified to prepare a cathode active material ($LiNi_{0.9}Co_{0.05}Mn_{0.04}Al_{0.01}O_2$). A secondary battery was manufactured using the cathode active material.

## Example 4

A cathode active material ($LiNi_{0.9}Co_{0.05}Mn_{0.03}Al_{0.02}O_2$) and a secondary battery were manufactured in the same manner as in Example 1, except that median particle diameters of the first precursor and the second precursor were adjusted to 16.2 $\mu$m and 25.1, respectively, by varying co-precipitation times during preparation of the first precursor and the second precursor.

## Comparative Example 1

A first precursor and a second precursor were prepared in the same manner as in Example 1, except that $Al_2(SO_4)_3$ was not added during co-precipitation of the first precursor and the second precursor.

Lithium hydroxide, the first precursor, the second precursor, and Al(OH)$_3$ were added to a dry high-speed mixer at a ratio of 1.05:0.6:0.4:0.1, and uniformly mixed for about 5 minutes to prepare a mixture.

The mixture was placed in a calcination furnace and heated to 750°C at a heating rate of 2°C/min, and maintained at 750°C for 10 hours. Oxygen was continuously supplied at a flow rate of 10 mL/min during the heating and holding. After completion of the calcination, the calcined product was allowed to cool naturally to room temperature, and then pulverized and classified to prepare a cathode active material ($LiNi_{0.9}Co_{0.05}Mn_{0.04}Al_{0.01}O_2$). A secondary battery was manufactured using the cathode active material.

## Comparative Example 2

A cathode active material ($LiNi_{0.9}Co_{0.03}Mn_{0.03}Al_{0.04}O_2$) and a secondary battery were manufactured in the same manner as in Comparative Example 1, except that $NiSO_4$, $CoSO_4$, $MnSO_4$, and $Al_2(SO_4)_3$ were mixed in distilled water so as to have a composition of 90:3:3:4.

## Comparative Example 3

A cathode active material ($LiNi_{0.9}Co_{0.05}Mn_{0.04}Al_{0.01}O_2$) and a secondary battery were manufactured in the same manner as in Comparative Example 1, except that $NiSO_4$, $CoSO_4$, $MnSO_4$, and $Al_2(SO_4)_3$ were mixed in distilled water so as to have a composition of 90:5:4:1.

## Experimental Example

### (1) Measurement of Al/Co Weight Ratio in Primary Particles

Among the cathode active materials prepared according to the above-described examples and comparative examples, particles having a particle diameter of n $\mu$m were cut to expose a cross-section of the primary particles. The primary particle was then processed into a needle-shaped structure having a tip radius of about 40 nm to prepare a sample. The sample was loaded into a chamber of an atomic probe tomography analyzer (LEAP4000X HR, CAMECA) to measure an internal composition of the primary particle.

Specifically, measurements were performed under conditions of a mass resolving power of 1,100, a lateral resolution of 0.4 nm, and a depth resolution of 0.2 nm, with an analytical sensitivity of less than 10 ppm.

Then, aluminum and cobalt concentrations within primary particles of particles having a particle diameter of about n+10 $\mu$m, among the cathode active materials, were measured using the same method.

WR (A/B) was calculated by defining an Al/Co weight ratio measured in particles having a particle diameter of n $\mu$m as A and an Al/Co weight ratio measured in particles having a particle diameter of n+10 $\mu$m as B.

In Comparative Examples 1-1 and 1-2, measurements were performed by varying a particle diameter (n $\mu$m) of particles to be measured among the cathode active materials prepared according to Comparative Example 1. Referring to Comparative Examples 1-1 and 1-2, the cathode active material of Comparative Example 1 exhibited a WR outside the range of the examples at any particle diameter (n μm) selected for measurement.

The n μm and n+10 μm particles, the measured Al/Co weight ratios, and the WR values are shown in Table 1 below.

[TABLE 1]

| | n μm particles | | | | n+10 μm particles | | | | WR (A/B) |
|---|---|---|---|---|---|---|---|---|---|
| | Particle diameter (μm) | Al (wt%) | Co (wt%) | A (Al/Co) | Particle diameter (μm) | Al (wt%) | Co (wt%) | B (Al/Co) | |
| Example 1 | 4.3 | 0.43 | 2.27 | 0.189 | 14.5 | 0.41 | 2.34 | 0.175 | 1.08 |
| Example 2 | 4.2 | 0.07 | 2.30 | 0.030 | 14.8 | 0.07 | 2.26 | 0.031 | 0.98 |
| Example 3 | 4.3 | 0.25 | 2.83 | 0.0883 | 14.8 | 0.24 | 2.45 | 0.0979 | 0.90 |
| Example 4 | 16.1 | 0.18 | 2.54 | 0.0708 | 26.2 | 0.16 | 2.45 | 0.0653 | 1.09 |
| Comparative Example 1 | 4.5 | 0.65 | 2.44 | 0.266 | 14.2 | 0.07 | 2.68 | 0.026 | 10.2 |
| Comparative Example 1-1 | 1.7 | 1.80 | 2.01 | 0.896 | 11.6 | 0.14 | 2.57 | 0.054 | 16.44 |
| Comparative Example 1-2 | 11.0 | 0.13 | 2.54 | 0.051 | 21.0 | 0.04 | 2.70 | 0.0148 | 3.45 |
| Comparative Example 2 | 4.5 | 0.95 | 1.83 | 0.519 | 14.5 | 0.98 | 1.62 | 0.605 | 0.86 |
| Comparative Example 3 | 4.5 | 0.42 | 2.10 | 0.20 | 14.2 | 0.31 | 2.09 | 0.148 | 1.35 |

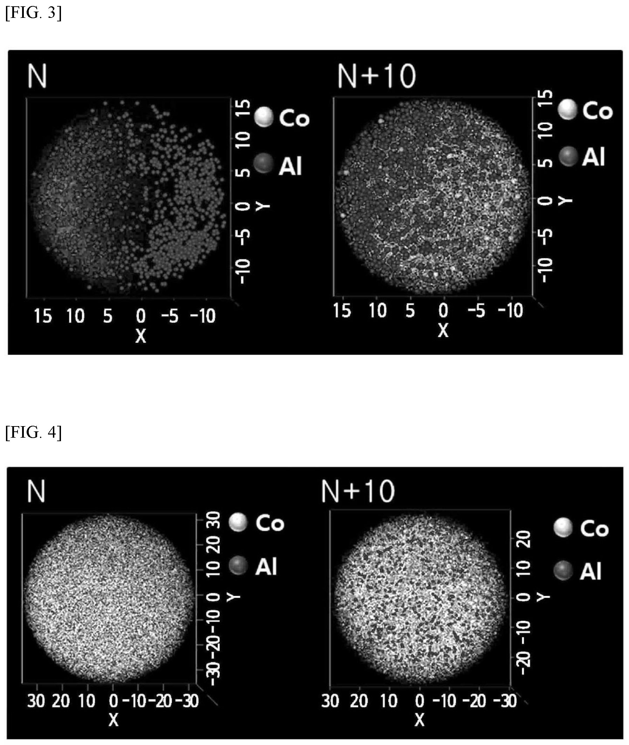

FIGS. 3 to 5 are atomic probe tomography (APT) analysis photographs of lithium metal oxide particles prepared according to Example 1, Example 2, and Comparative Example 1, respectively.

In FIGS. 3 to 5, "N" denotes an APT analysis image of particles having a particle diameter of n μm, and "N+10" denotes an APT analysis image of particles having a particle diameter of n+10 μm.

Referring to FIGS. 3 and 4, in the cathode active materials prepared in Example 1 and Example 2, a distribution degree of aluminum and cobalt within primary particles of particles having a particle diameter of n μm was similar to a distribution degree of aluminum and cobalt within primary particles of particles having a particle diameter of n+10 μm.

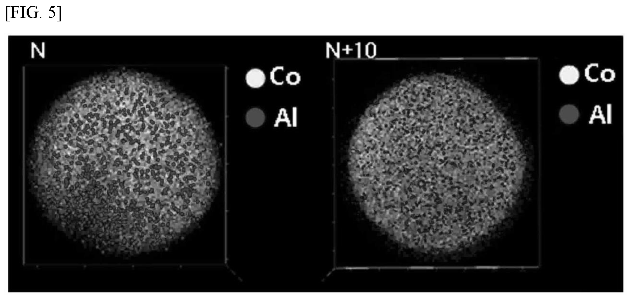

However, referring to FIG. 5, in the cathode active material prepared in Comparative Example 1, aluminum concentration within primary particles of particles having a particle diameter of n μm was greater than aluminum concentration within primary particles of particles having a particle diameter of n+10 μm. In Comparative Example 1, aluminum doping was concentrated in particles having relatively small particle diameters.

(2) Evaluation of Initial Discharge Capacity

The lithium secondary batteries manufactured according to the examples and comparative examples were placed in a chamber at 25 °C, charged (CC/CV 0.1C, 4.3 V, 0.05C cut-off), and discharged (CC 0.1C, 3.0 V cut-off). The battery capacity (initial discharge capacity) then was measured.

(3) Evaluation of Capacity Retention

The lithium secondary batteries manufactured according to the examples and comparative examples were placed in a chamber at 25 °C, charged (CC/CV 0.1C, 4.3 V, 0.05C cut-off), and discharged (CC 0.1C, 3.0 V cut-off) once. Thereafter, the batteries were charged (CC/CV 0.1C, 4.3 V, 0.05C cut-off), and discharged (CC 4.0C, 3.0 V cut-off) once more. The capacity retention was evaluated by dividing a 4.0C discharge capacity by a 0.1C discharge capacity and converting a resulting value into a percentage (%).

(4) Evaluation of High-Temperature Cycle Life Characteristics

The lithium secondary batteries manufactured according to the examples and comparative examples were placed in a chamber at 45°C and subjected to 300 cycles of charging (CC/CV 1.0C, 4.3 V, 0.05C cut-off) and discharging (CC 1.0C, 3.0 V cut-off). The high-temperature cycle life characteristics were evaluated as a percentage of the discharge capacity at the 300th cycle divided by the discharge capacity at the first cycle.

The evaluation results are shown in Table 2 below.

[TABLE 2]

| Category | Initial discharge capacity (mAh/g) | Capacity retention (%) | High-temperature cycle life characteristics (%) |
|---|---|---|---|
| Example 1 | 212 | 80.4 | 75.3 |
| Example 2 | 216 | 83.7 | 69.1 |
| Example 3 | 214 | 82.5 | 69.3 |
| Example 4 | 211 | 80.6 | 78.2 |
| Comparative Example 1 | 218 | 85.9 | 56.9 |
| Comparative Example 2 | 192 | 50.2 | 84.7 |
| Comparative Example 3 | 218 | 85.9 | 56.9 |

Referring to Tables 1 and 2, in the examples, a ratio of Al/Co of particles having a particle diameter of n+10 $\mu$m to Al/Co of particles having a particle diameter of n $\mu$m was 0.9 to 1.1, and the initial discharge capacity, capacity retention, and high-temperature cycle life characteristics were enhanced.

In the comparative examples, the ratio of Al/Co of particles having a particle diameter of n+10 $\mu$m to Al/Co of particles having a particle diameter of n $\mu$m was less than 0.9 or greater than 1.1, and the initial discharge capacity, capacity retention, and/or high-temperature cycle life characteristics of the secondary battery were deteriorated.

In Comparative Example 2, the Al/Co weight ratio within primary particles was relatively high, and the initial discharge capacity and capacity retention of the secondary battery were significantly deteriorated.

**Claims**

1. A cathode active material for a lithium secondary battery comprising lithium metal oxide particles containing cobalt and aluminum and having a form of secondary particles in which a plurality of primary particles are agglomerated, wherein a WR, represented by Equation 1 below, is 0.9 to 1.1:

$$[\text{Equation 1}]$$

$$WR = A / B$$

   (in Equation 1, A is a ratio of aluminum content to cobalt content contained in primary particles of particles having a particle diameter of n $\mu$m among the lithium metal oxide particles,
   B is a ratio of aluminum content to cobalt content contained in primary particles of particles having a particle diameter of n+10 $\mu$m among the lithium metal oxide particles, and
   n $\mu$m is 1 $\mu$m to 22 $\mu$m).

2. The cathode active material for a lithium secondary battery according to claim 1, wherein the ratio of aluminum content to cobalt content is a value measured using atomic probe tomography (APT) on a cross-section of the primary particles.

3. The cathode active material for a lithium secondary battery according to claim 1 or 2, wherein a ratio of aluminum content in primary particles of particles having a particle diameter of n+10 $\mu$m among the lithium metal oxide particles to aluminum content in primary particles of particles having a particle diameter of n $\mu$m is 0.85 to 1.1.

4. The cathode active material for a lithium secondary battery according to any one of claims 1 to 3, wherein the lithium metal oxide particles have a particle diameter of 0.8 $\mu$m to 32 $\mu$m.

5. The cathode active material for a lithium secondary battery according to any one of claims 1 to 4, wherein a minor axis of each of the primary particles is 100 nm to 500 nm.

6. The cathode active material for a lithium secondary battery according to any one of claims 1 to 5, wherein aluminum content contained in each primary particle of the lithium metal oxide particles is less than cobalt content contained in each primary particle of the lithium metal oxide particles.

7. The cathode active material for a lithium secondary battery according to any one of claims 1 to 6, wherein the lithium metal oxide particles further comprise nickel or manganese.

8. The cathode active material for a lithium secondary battery according to any one of claims 1 to 7, wherein each of the lithium metal oxide particles is represented by Formula 1 below:

$$[\text{Formula 1}] \qquad Li_aCo_xAl_yM_{1-x-y}O_{2+b}$$

(in Formula 1, $0.9 \leq a \leq 1.2$, $0 < x \leq 0.3$, $0 < y \leq 0.2$, $-0.2 \leq b \leq 0.2$, and M is at least one of Ni, Mn, Ti, Zr, Ba, Tb, Nb, Y, W, B, and Sr).

9. A lithium secondary battery comprising:

a cathode comprising the cathode active material for a lithium secondary battery of any one of claims 1 to 8; and
an anode disposed opposite the cathode.

10. A method for manufacturing a cathode active material comprising:

preparing a first precursor including cobalt and aluminum;
preparing a second precursor including cobalt and aluminum and having a median particle diameter ($D_{50}$) that is 9 $\mu$m to 11 $\mu$m larger than a median particle diameter ($D_{50}$) of the first precursor;
preparing a precursor blend by mixing a lithium precursor, the first precursor, and the second precursor; and
calcining the precursor blend.

11. The method for manufacturing a cathode active material according to claim 10, wherein a ratio ($A_1/B_1$) between a ratio ($A_1$) of aluminum content to cobalt content included in the first precursor and a ratio ($B_1$) of aluminum content to cobalt content included in the second precursor is 0.9 to 1.1.

12. A method for manufacturing a cathode active material comprising:

preparing a first precursor including cobalt;
preparing a second precursor including cobalt and having a median particle diameter ($D_{50}$) that is 9 $\mu$m to 11 $\mu$m larger than a median particle diameter ($D_{50}$) of the first precursor;
preparing a first blend by mixing the second precursor, a lithium precursor, and an aluminum precursor;
preparing a second blend by mixing the first blend and the first precursor; and
calcining the second blend.

13. The method for manufacturing a cathode active material according to claim 12, wherein the first precursor and the second precursor do not contain aluminum.

14. The method for manufacturing a cathode active material according to claim 12 or 13, wherein a ratio of cobalt content in the second precursor to cobalt content in the first precursor is 0.85 to 1.1 on a weight basis.

15. The method for manufacturing a cathode active material according to any one of claims 12 to 14, wherein a content of the second precursor in the second blend is greater than or equal to a content of the first precursor.

[FIG. 1]

[FIG. 2]

[FIG. 3]

[FIG. 4]

[FIG. 5]

## INTERNATIONAL SEARCH REPORT

International application No.

**PCT/KR2024/012503**

| A. | CLASSIFICATION OF SUBJECT MATTER |
|---|---|

**H01M 4/525**(2010.01)i; **H01M 4/505**(2010.01)i; **H01M 4/131**(2010.01)i; **H01M 10/052**(2010.01)i; **C01G 53/00**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 10/0525(2010.01); H01M 4/13(2010.01); H01M 4/131(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 코발트(cobalt), 알루미늄(aluminium), 입경 (particle size), 함량(content)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0094041 A (LG ENERGY SOLUTION, LTD.) 05 July 2022 (2022-07-05) See claims 1 and 2; and paragraphs [0115], [0116], [0131], [0132] and [0142]. | 1-15 |
| A | KR 10-1953837 B1 (L & F CO., LTD.) 05 March 2019 (2019-03-05) See claims 1-27. | 1-15 |
| A | KR 10-2021-0058490 A (LG ENERGY SOLUTION, LTD.) 24 May 2021 (2021-05-24) See claims 1-15. | 1-15 |
| A | KR 10-2527927 B1 (LG ENERGY SOLUTION, LTD.) 28 April 2023 (2023-04-28) See claims 1-4. | 1-15 |
| A | WO 2019-104544 A1 (XTC NEW ENERGY MATERIALS (XIAMEN) LTD.) 06 June 2019 (2019-06-06) See claims 1-17. | 1-15 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 December 2024** | **02 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012503**

| Patent document cited in search report | | | Publication date (day/month/year) | Patent family member(s) | | | Publication date (day/month/year) |
|---|---|---|---|---|---|---|---|
| KR | 10-2022-0094041 | A | 05 July 2022 | CN | 115552659 | A | 30 December 2022 |
| | | | | EP | 4152438 | A1 | 22 March 2023 |
| | | | | JP | 2023-525312 | A | 15 June 2023 |
| | | | | US | 2023-0378432 | A1 | 23 November 2023 |
| | | | | WO | 2022-145997 | A1 | 07 July 2022 |
| KR | 10-1953837 | B1 | 05 March 2019 | KR | 10-2018-0066623 | A | 19 June 2018 |
| KR | 10-2021-0058490 | A | 24 May 2021 | None | | | |
| KR | 10-2527927 | B1 | 28 April 2023 | KR | 10-2019-0084759 | A | 17 July 2019 |
| WO | 2019-104544 | A1 | 06 June 2019 | CN | 109643791 | A | 16 April 2019 |
| | | | | CN | 109643791 | B | 07 August 2020 |
| | | | | EP | 3719886 | A1 | 07 October 2020 |
| | | | | JP | 2020-514963 | A | 21 May 2020 |
| | | | | JP | 6868697 | B2 | 12 May 2021 |
| | | | | KR | 10-2019-0090018 | A | 31 July 2019 |
| | | | | KR | 10-2253796 | B1 | 20 May 2021 |
| | | | | US | 11183707 | B2 | 23 November 2021 |
| | | | | US | 2019-0334198 | A1 | 31 October 2019 |

Form PCT/ISA/210 (patent family annex) (July 2022)